# EUROPEAN PATENT APPLICATION

(11) **EP 4 732 927 A1**
(43) Date of publication of application: **29.04.2026**
(21) Application number: 25209344.8
(22) Date of filing: 17.10.2025
(51) Int. Cl.: B01D 19/00

(54) **THERMAL DEGASIFICATION SYSTEM, THERMAL DEGASIFICATION METHOD, AND SYNGAS COOLING APPARATUS**

(30) Priority: 23.10.2024 CN 202411487035
(71) Applicant: L'Air Liquide, Société Anonyme pour l'Etude et l'Exploitation des Procédés Georges Claude, 75007 Paris (FR)
(72) Inventor: DONG, Kezeng, Hangzhou, 310012 (CN); ZENG, Yulong, Hangzhou, 310012 (CN); GE, Pengfei, Hangzhou, 310012 (CN)
(74) Representative: Air Liquide

(57) **Abstract**

This disclosure provides a thermal degasification system, a thermal degasification method, and a syngas cooling apparatus. In the thermal degasification system, a target liquid flowing through a liquid feed pipeline is collected in a degasifier, and a hot-fluid pipeline passes through the degasifier, whereby a waste-heat stream flowing through the hot-fluid pipeline exchanges heat with the target liquid in the degasifier, so that the target liquid reaches a predetermined temperature through the heat of the waste-heat stream, thereby removing a target gas dissolved in the target liquid. A pre-heater is disposed on the liquid feed pipeline upstream of the degasifier for preheating the target liquid. A liquid feed bypass leads out from a first position of the liquid feed pipeline and leads to a second position of the liquid feed pipeline. The first position and the second position are upstream and downstream of the pre-heater, respectively. A regulator is configured to be adjustable so that the flow rate of the target liquid flowing downstream through the liquid feed bypass changes. The thermal degasification system can be used in an apparatus for cooling syngas and has stronger applicability.

## Description

### Technical Field

This disclosure involves the chemical engineering field, relates to a thermal degasification system, also relates to a thermal degasification method, and particularly, relates to a syngas cooling apparatus.

### Background Art

Steam reforming is a method for hydrogen production commonly used in the industrial field, also often referred to as steam methane reforming (SMR). The temperature of the reformed gas coming out of the reforming furnace is very high, and it is often necessary to utilize the waste heat therein. Moreover, the reformed gas itself also needs to be cooled before being transported downstream. Therefore, the waste heat of the reformed gas can be utilized simultaneously in the cooling system for cooling the reformed gas. Similarly, if the reformed gas coming out of the reforming furnace needs to undergo a shift reaction treatment, the resulting shift gas can also use the same cooling system to recover waste heat. Reformed gas and shift gas can be collectively referred to as syngas.

The Chinese utility model patent CN205973771U discloses an apparatus for cooling syngas. In this apparatus, boiler feedwater is preheated by a preheating heat exchanger and then conveyed to a degasifier. The syngas exchanges heat with the boiler feedwater in the degasifier, thereby heating the boiler feedwater and thus degasifying the boiler feedwater. For the main path through which the syngas flows to the degasifier for heat exchange, a bypass is further provided with a valve. In this way, by adjusting the valve in the bypass, the flow rate through the main path can be adjusted, thereby adjusting the heat supplied by the syngas to the degasifier, so that the boiler feedwater can reach the desired temperature.

However, during actual adjustment, since the pressure drop of the coil in the degasifier through which the syngas passes for heat exchange is small, whereas the pressure drop of the valve in the bypass is large, the adjustment range is often limited. It is difficult to heat the boiler feedwater to the desired temperature under various operating conditions.

### Brief Summary of the Invention

An object of this disclosure is to provide a thermal degasification system, applicable to an apparatus for cooling syngas, which has a wider range of application.

This disclosure provides a thermal degasification system, comprising a liquid feed pipeline, a hot-fluid pipeline, a degasifier, and a pre-heater. A target liquid flowing through the liquid feed pipeline is collected in the degasifier, and the hot-fluid pipeline passes through the degasifier, whereby a waste-heat stream flowing through the hot-fluid pipeline exchanges heat with the target liquid in the degasifier, so that the target liquid reaches a predetermined temperature through the heat of the waste-heat stream, thereby removing a target gas dissolved in the target liquid. The pre-heater is disposed on the liquid feed pipeline upstream of the degasifier for preheating the target liquid. The thermal degasification system also comprises a liquid feed bypass and a regulator. The liquid feed bypass leads out from a first position of the liquid feed pipeline and leads to a second position of the liquid feed pipeline. On the liquid feed pipeline, the first position and the second position are upstream and downstream of the pre-heater, respectively, and the second position is upstream of the degasifier. The regulator is configured to be adjustable so that the flow rate of the target liquid flowing downstream through the liquid feed bypass changes.

In one embodiment, the regulator is a control valve disposed on the liquid feed bypass.

In one embodiment, the pre-heater is a heat exchanger. Both the liquid feed pipeline and the hot-fluid pipeline pass through the pre-heater to exchange heat with each other, whereby the target liquid in the liquid feed pipeline is preheated by the heat of the waste-heat stream in the hot-fluid pipeline. The hot-fluid pipeline conveys the waste-heat stream from the degasifier to the pre-heater.

In one embodiment, the thermal degasification system comprises a control system. The control system comprises a controller, a first detector, and a second detector. The controller regulates the regulator according to the detection signals of the first detector and the second detector. The first detector is configured for detecting the pressure in the degasifier. The second detector is configured for detecting the temperature of the target liquid in the liquid feed pipeline downstream of the second position and upstream of the degasifier.

In one embodiment, the control system is configured to adopt cascade control with the pressure in the degasifier as the primary controlled parameter, the temperature of the target liquid as the secondary controlled parameter, and the flow rate through the liquid feed bypass as the final control element.

In one embodiment, the thermal degasification system also comprises a post-heater and a liquid supply pipeline. The liquid supply pipeline is configured for feeding the target liquid that has passed through the degasifier to the downstream. The post-heater is a heat exchanger. Both the liquid supply pipeline and the hot-fluid pipeline pass through the post-heater to exchange heat with each other, whereby the target liquid in the liquid supply pipeline is heated by the heat of the waste-heat stream in the hot-fluid pipeline. The hot-fluid pipeline conveys the waste-heat stream from the post-heater to the degasifier.

This disclosure also provides a thermal degasification method, employing the aforementioned thermal degasification system. By adjusting the flow rate of the target liquid flowing downstream through the liquid feed bypass in the thermal degasification system, the temperature of the target liquid upon reaching the degasifier is controlled, thereby matching the heat of the waste-heat stream passing through the degasifier via the hot-fluid pipeline in the thermal degasification system , so that the target liquid in the degasifier reaches a predetermined temperature.

This disclosure further provides a syngas cooling apparatus. The syngas cooling apparatus employs the aforementioned thermal degasification system. The deaerator of the syngas cooling apparatus is the degasifier of the thermal degasification system. The gas delivery pipeline for outputting syngas of the syngas cooling apparatus is the hot-fluid pipeline of the thermal degasification system. The water feed pipeline for feeding boiler feedwater of the syngas cooling apparatus is the liquid feed pipeline of the thermal degasification system. The preheating heat exchanger for preheating the boiler feedwater before the deaerator of the syngas cooling apparatus is the pre-heater of the thermal degasification system.

In one embodiment, the syngas cooling apparatus also comprises a gas-liquid separator and a cooler. On the gas delivery pipeline, the gas-liquid separator is disposed downstream of the preheating heat exchanger, and the cooler is disposed between the deaerator and the preheating heat exchanger, and/or between the preheating heat exchanger and the gas-liquid separator.

In one embodiment, the heating heat exchanger for heating the boiler feedwater after the deaerator and before the steam drum of the syngas cooling apparatus is the post-heater of the thermal degasification system.

When the above thermal degasification system is used in an apparatus for cooling syngas, by providing a liquid feed bypass that bypasses the pre-heater, and then adjusting the flow rate flowing downstream through the liquid feed bypass by a regulator, that is, adjusting the flow rate flowing downstream through the pre-heater, the temperature of the downstream mixed target liquid after being heated by the pre-heater can be adjusted. In this way, the initial temperature of the target liquid entering the degasifier can be changed, so that the target liquid can be heated from different initial temperatures to the same desired temperature with the same heat input under different operating conditions. It is worth mentioning that the pressure drop on the liquid side of the preheating heat exchanger is controllable, so even if only a control valve that can adjust the flow rate is disposed on the liquid feed bypass, it is sufficient to provide a large adjustment range. Moreover, the design pressure on the liquid side is low, and a general low-pressure liquid valve can meet the requirements, and the requirements for the installation space around the equipment are lower. Therefore, the above thermal degasification system has a wider range of application and a stronger economic efficiency.

### Brief Description of the Figures

The advantages and spirit of this disclosure can be further understood through the following detailed description of the invention and the accompanying drawings.
FIG. 1 is a schematic diagram of a syngas cooling apparatus according to an embodiment of this disclosure.
FIG. 2 is a schematic diagram of a syngas cooling apparatus according to a comparative example.

### Detailed Description of the Embodiments

The specific embodiments of this disclosure will be described in detail below in conjunction with the accompanying drawings. However, it should be understood that this disclosure is not limited to the embodiments described below, and the technical concept of this disclosure can be implemented in combination with other known technologies or functions, or with other technologies that are the same as those known technologies.

For example, if a first feature is described as being formed above or on a second feature in the specification, it may include an embodiment in which the first feature and the second feature are formed by direct connection, and may also include an embodiment in which an additional feature is formed between the first feature and the second feature, so that the first feature and the second feature may not be directly connected. Further, when a first component is described as being connected or coupled to a second component, this description includes an embodiment in which the first component and the second component are directly connected or coupled to each other, and also includes an embodiment in which one or more other intervening components are added to indirectly connect or couple the first component and the second component.

The terms "first" and "second" are used for descriptive purposes only and are not intended to limit the temporal order, quantity, or importance, and should not be understood as indicating or implying relative importance or implicitly indicating the number of the indicated technical features, but merely to distinguish one technical feature from another in this technical solution. Thus, features defined with "first" and "second" may explicitly or implicitly include one or more of such features. In the description of this disclosure, the meaning of "a plurality of" is two or more than two (i.e., more than two), unless otherwise specified. Similarly, the use of qualifiers such as "a" or "an" herein does not refer to a limitation on quantity, but rather describes a technical feature that has not been previously mentioned. Similarly, unless a noun is modified by a specific quantity quantifier, it should be regarded herein as including both singular and plural forms, and this technical solution can include a single such technical feature or a plurality of such technical features. Similarly, modifiers such as "about" and "approximately" appearing before a number herein usually include the number itself, and their specific meaning should be understood in the context.

The term "and/or" used herein includes any and all combinations of one or more of the related listed items. Unless otherwise stated, all terms (including technical and scientific terms) used herein have the same meaning as commonly understood by one of ordinary skill in the art to which this invention belongs. It should also be understood that terms, such as those defined in commonly used dictionaries, should be interpreted as having a meaning that is consistent with their meaning in the context of the relevant art and this specification, and should not be interpreted in an idealized or overly formal sense unless expressly so defined herein. For the sake of brevity and/or clarity, well-known functions or constructions may not be described in detail.

Herein, a thermal deaerator is used as an example of a degasifier, and an apparatus for cooling syngas is used as an example of a thermal degasification system. A thermal deaerator is usually used to remove dissolved gases, especially dissolved oxygen, from the boiler feedwater of an SMR system. The syngas coming out of the reforming furnace can often be used as a heat source for the deaerator. Generally, the syngas will undergo a series of cooling treatments before reaching the deaerator. An apparatus for cooling syngas, also known as a syngas cooling apparatus, is often referred to as a shift/reforming gas cooling section. Recovering part of the heat (which can be called waste heat herein) in the syngas cooling apparatus can improve the energy efficiency of the entire plant. Herein, syngas containing excess heat that can be recovered is used as an example of a waste-heat stream containing waste heat.

When the plant is designed to produce more steam, a coil is usually installed in the deaerator to recover the waste heat in the syngas. In this case, it is usually necessary to control the flow rate of the syngas flowing to the deaerator at full load and partial load (i.e., non-full load) to heat the boiler feedwater in the deaerator to the desired temperature. That is, by limiting the flow rate (and thus, the heat) input to the coil installed in the deaerator, the operating pressure in the deaerator is maintained, especially at non-full load.

As mentioned earlier, only providing a two-way valve in the bypass will result in a limited adjustment range due to the difficulty in balancing the pressure drop between at the coil for heat exchange in the deaerator and at the two-way valve in the bypass. In other words, in the actual process, since the pressure drop of the syngas passing through the heat exchange coil in the deaerator is small, it is difficult to meet the adjustment range under different operating conditions by using a single bypass valve. It is analysed that, it may be considered to simultaneously dispose two-way valves for adjustment in both the bypass and the main path. In order to achieve the flow distribution between the bypass and the main path, it is often necessary to connect the main path valve and the bypass valve through a mechanical linkage to ensure that when one valve is opened, the other valve is closed. However, for a syngas cooling apparatus and similar equipment, the space where the corresponding module is located is limited, and it is actually difficult to arrange two-way valves in both the main path and the bypass. In particular, in some operating conditions, the syngas involves a two-phase flow, and the selection of valves for the main path and the bypass is more difficult.

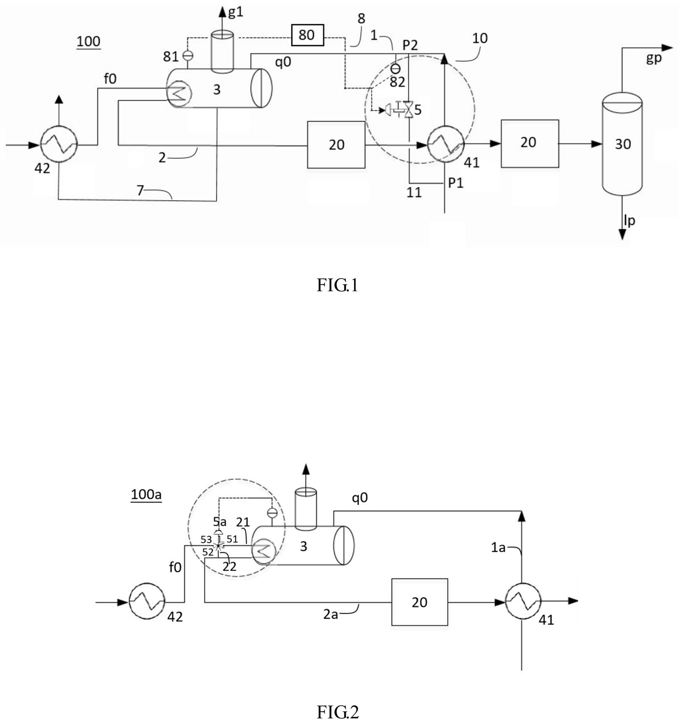

It is further analysed that, as can be seen from FIG. 2, it may be considered to arrange a three-way valve 5a at the upstream connection point of the main path 21 and the bypass 22. By adjusting the opening of the two outlets 51, 52 of the three-way valve 5a, the syngas flowing in through the inlet 53 can be distributed to the main path 21 and the bypass 22 as needed. However, compared with an ordinary two-way valve, a three-way valve is usually more expensive and has a longer delivery time.

In addition, for the comparative example shown in FIG. 2, if the stream passing through the three-way valve 5a is a gas-liquid mixed phase, the three-way valve 5a usually needs to be of a larger size to adapt to this two-phase operation. Therefore, the size of the pipeline, especially the pipeline connecting to the inlet 51, must be enlarged to match the three-way valve 5a.

The above solutions all remove dissolved gases such as oxygen by controlling the appropriate heat input to the deaerator at the coil, while avoiding the accumulation of excessive pressure in the deaerator, especially at non-full load.

Hereto, the inventor proposes a solution that breaks the above conventional thinking and can avoid many of the shortcomings of the above solutions.

As shown in FIG. 1, the thermal degasification system 10 includes a liquid feed pipeline 1, a hot-fluid pipeline 2, a degasifier 3, and a pre-heater 41. In FIG. 1 and the aforementioned FIG. 2, similar or identical reference numerals denote similar or identical components, and redundant descriptions can be omitted to make the entire description more concise. It can be understood that the accompanying drawings herein are only for illustrative purposes and are not necessarily drawn to scale, and should not be regarded to limit the protection scope actually required by this disclosure.

A target liquid q0 flowing through the liquid feed pipeline 1 is collected in the degasifier 3, and the hot-fluid pipeline 2 passes through the degasifier 3, whereby a waste-heat stream f0 flowing through the hot-fluid pipeline 2 exchanges heat with the target liquid q0 in the degasifier 3, so that the target liquid q0 reaches a predetermined temperature through the heat of the waste-heat stream f0, thereby removing a target gas g1 dissolved in the target liquid q0. The aforementioned predetermined temperature is, for example, 105°C, which can be applied to remove dissolved oxygen from water. It can be understood that the aforementioned predetermined temperature can also be a temperature range, for example, 102-110°C. A "waste-heat stream" can be regarded as a stream containing waste heat (or surplus heat) that can be utilized.

To be understood, the "pipeline", "pipe", "pipe section", etc. used herein all refer to the lines for the streams to flow through, and do not limit the physical form of the corresponding components. Taking "pipeline" as an example, a pipeline can refer to a section of a complete pipe line. A pipeline can also be a combination of multiple pipe lines connected in sequence. The multiple pipelines can be connected by pipe joints or by other pipeline components such as valves. The space for the streams to flow through in the pipe joints or other pipeline components can also be regarded as part of the pipeline. For example, the hot-fluid pipeline 2 can be in the form of a coil within the degasifier 3, which can increase the heat exchange efficiency. Both the coil located inside the degasifier 3 and the pipe line located outside the degasifier 3 are part of the hot-fluid pipeline 2.

The pre-heater 41 is disposed on the liquid feed pipeline 1 upstream of the degasifier 3 for preheating the target liquid q0. To be understood, "upstream" and "downstream" will be used herein to describe relative positions. To be understood, it's expressed with respect to the flow direction of the stream in the corresponding pipeline. For different streams, the upstream and downstream positions of two components relative to each other may change.

The thermal degasification system 10 further includes a liquid feed bypass 11 and a regulator 5. The liquid feed bypass 11 leads out from a first position P1 of the liquid feed pipeline 1 and leads to a second position P2 of the liquid feed pipeline 1. On the liquid feed pipeline 1, the first position P1 and the second position P2 are upstream and downstream of the pre-heater 41, respectively, and the second position P2 is upstream of the degasifier 3.

The regulator 5 is configured to be adjustable so that the flow rate of the target liquid q0 flowing downstream through the liquid feed bypass 11 changes. In the embodiment shown in FIG. 1, the regulator 5 can be a control valve disposed on the liquid feed bypass 11. In another embodiment, the regulator 5 can include two control valves disposed on the liquid feed bypass 11 and the main-path pipe section 10, respectively, or, the regulator 5 can be a three-way valve. The control valve can be, for example, an automatic control valve that can be controlled by an electrical signal, and thus can automatically adjust the flow rate.

In the above thermal degasification system 10, by adjusting the flow rate of the target liquid q0 flowing downstream through the liquid feed bypass 11, that is, adjusting the flow rate of the target liquid q0 through the pre-heater 41 in the main-path pipe section 10, the heat for preheating the target liquid q0 by the pre-heater 41 can be adjusted. In this way, when the heat input to the degasifier 3 by the waste-heat stream f0 is essentially unchanged, the final temperature of the target liquid q0 after heated in the degasifier 3 can meet the expectation by adjusting the initial temperature of the target liquid q0 entering the degasifier 3.

In addition, compared with the comparative example shown in FIG. 2, the stream in the hot-fluid pipeline 2 can all be used as the heat source for the heat exchange coil in the degasifier 3, so a smaller heat exchange coil can meet the heating demand, which can further facilitate the arrangement.

The above thermal degasification system 10 is applied in an apparatus for cooling syngas. That is, the waste-heat stream f0 is the syngas, the target liquid q0 is the boiler feedwater, and the degasifier 3 is the deaerator. At this point, the heat input from the syngas to the deaerator does not need to be changed. It is only necessary to change the initial temperature of the boiler feedwater entering the deaerator, so as to heat the boiler feedwater to the desired temperature, that is, the aforementioned predetermined temperature. At non-full load, i.e., partial load, dissolved gases such as oxygen are removed, while the accumulation of excessive pressure in the deaerator. To be mentioned later, in the syngas cooling apparatus 100, the pressure drop of the preheating heat exchanger as the pre-heater 41 is large, so even if only a control valve is disposed on the liquid feed bypass 11, it is sufficient to provide a wide adjustment range. Therefore, the above thermal degasification system 10 can have stronger applicability.

In FIG. 1, the pre-heater 41 can be a heat exchanger. Both the liquid feed pipeline 1 and the hot-fluid pipeline 2 pass through the pre-heater 41 to exchange heat with each other, whereby the target liquid q0 in the liquid feed pipeline 1 is preheated by the heat of the waste-heat stream f0 in the hot-fluid pipeline 2.

The hot-fluid pipeline 2 conveys the waste-heat stream f0 from the degasifier 3 to the pre-heater 41. That is, after waste-heat streamcontributing heat and thus getting cooled in the degasifier 3, the waste-heat stream f0 enters the pre-heater 41 to further contribute heat and thus get cooled. In other words, on the hot-fluid pipeline 2, the pre-heater 41 is located downstream of the degasifier 3. This arrangement can further recover the waste heat in the preheating stream f0.

In FIG. 1, the thermal degasification system 10 can include a control system 8. The control system 8 includes a controller 80, a first detector 81, and a second detector 82. The controller 80 regulates the regulator 5 according to the detection signals of the first detector 81 and the second detector 82.

The detector can be, for example, various sensors, such as a pressure sensor, an optical sensor, an ultrasonic sensor, etc. The controller can be one or more application-specific integrated circuits (ASICs), digital signal processors (DSPs), digital signal processing devices (DSPDs), programmable logic devices (PLDs), field-programmable gate arrays (FPGAs), processors, controllers, microcontrollers, microprocessors, or a combination thereof.

The first detector 81 is configured for detecting the pressure in the degasifier 3, and the second detector 82 is configured for detecting the temperature of the target liquid q0 in the liquid feed pipeline 1 downstream of the second position P2 and upstream of the degasifier 3. In FIG. 1, the signal connection between the first detector 81, the second detector 82, and the controller 80 is schematically shown by a dashed line. To be understood, the connection can be a wired connection or a wireless connection.

In the thermal degasification system 10, the control system 8 is configured to adopt cascade control with the aforementioned pressure in the degasifier 3 as the primary controlled parameter, the aforementioned temperature of the target liquid q0 as the secondary controlled parameter, and the aforementioned flow rate through the liquid feed bypass 11 as the final control element. That is, the primary controlled parameter is the pressure in the degasifier 3 detected by the first detector 81, the secondary controlled parameter is the temperature of the target liquid q0 in the liquid feed pipeline 1 downstream of the second position P2 and upstream of the degasifier 3 detected by the second detector 82, and the final control element that is actually directly adjusted is the bypass flow rate flowing downstream through the liquid feed bypass 11, which is adjusted to vary by the regulator 5. In other words, the pressure in the degasifier 3 is adjusted by a cascade control composed of a pressure control loop and a temperature control loop. For example, when the pressure in the degasifier 3 is higher than a set value, the pressure control loop will output a signal, intended to lower the temperature of the target liquid q0 in the liquid feed pipeline 1 downstream of the second position P2 and upstream of the degasifier 3. The temperature control loop then further increases the bypass flow rate to reach the target pressure in the degasifier 3.

In FIG. 1, the thermal degasification system 10 can further include a post-heater 42 and a liquid supply pipeline 7. The liquid supply pipeline 7 is configured for feeding the target liquid q0 that has passed through the degasifier 3 to the downstream.

The post-heater 42 can be a heat exchanger. Both the liquid supply pipeline 7 and the hot-fluid pipeline 2 pass through the post-heater 42 to exchange heat with each other, whereby the target liquid q0 in the liquid supply pipeline 7 is heated by the heat of the waste-heat stream f0 in the hot-fluid pipeline 2.

The hot-fluid pipeline 2 conveys the waste-heat stream f0 from the post-heater 42 to the degasifier 3. That is, after waste-heat streamcontributing heat and thus getting cooled in the post-heater 42, the waste-heat stream f0 enters the degasifier 3 to further contribute heat and thus further get cooled.

The above arrangement makes full use of the waste heat in the waste-heat stream f0.

FIG. 1 shows a syngas cooling apparatus 100, namely, an apparatus for cooling syngas. The syngas cooling apparatus 100 employs the thermal degasification system 10. The deaerator of the syngas cooling apparatus 100 is the degasifier 3 of the thermal degasification system 10. That is, the dissolved oxygen to be removed by the deaerator is the target gas g1.

The gas delivery pipeline for outputting syngas of the syngas cooling apparatus 100 is the hot-fluid pipeline 2 of the thermal degasification system 10. That is, the syngas is the waste-heat stream f0. To be noted, although it is called syngas, it is actually a gas-liquid two-phase flow in some pipelines.

The water feed pipeline for feeding boiler feedwater of the syngas cooling apparatus 100 is the liquid feed pipeline 1 of the thermal degasification system 10. That is, the boiler feedwater is the target liquid q0. The boiler feedwater usually needs to be demineralized before deaeration, so the boiler feedwater that has entered the liquid feed pipeline 1 but has not yet entered the deaerator can be called boiler demineralized water.

The preheating heat exchanger for preheating the boiler feedwater before the deaerator of the syngas cooling apparatus 100 is the pre-heater 41 of the thermal degasification system 10. That is, the boiler feedwater will be further heated after deaerated by the deaerator, and then conveyed into the reforming furnace.

In the syngas cooling apparatus 100, the pressure drop on the liquid side of the preheating heat exchanger is more controllable than the pressure drop of the syngas at the heat exchange coil in the deaerator. Therefore, it is easy to balance by disposing a control valve on the liquid feed bypass 11, while achieving a wide adjustment range.

The syngas cooling apparatus 100 also includes a gas-liquid separator 30 and a cooler 20. On the gas delivery pipeline (i.e., the hot-fluid pipeline 2), the gas-liquid separator 30 is disposed downstream of the preheating heat exchanger (i.e., the pre-heater 41). The cooler 20 is disposed between the deaerator (i.e., the degasifier 3) and the preheating heat exchanger, and/or between the preheating heat exchanger and the gas-liquid separator 30. That is, on the gas delivery pipeline as the hot-fluid pipeline 2, a cooler 20 can be disposed between the degasifier 3 and the pre-heater 41, and a cooler 20 can also be disposed between the pre-heater 41 and the gas-liquid separator 30. In FIG. 1, a cooler 20 is disposed at two positions, respectively. In another embodiment, a cooler 20 can be disposed at only one position. The cooler 20 can be, for example, a water-cooled cooler or an air-cooled cooler. In FIG. 1, the syngas that has contributed heat in the deaerator will be further cooled by sequentially passing through the cooler 20, the preheating heat exchanger, and another cooler 20, and then pass through the gas-liquid separator 30. The gas-liquid separator 30 is, for example, a gas-liquid separation tank, wherein the liquid phase lp flows out from the bottom, and the gas phase gp escapes from the top.

The preheating heat exchanger for preheating the boiler feedwater after the deaerator and before the steam drum (not illustrated) of the syngas cooling apparatus 100 is the post-heater 42 of the thermal degasification system 10. The steam drum is a device that can evaporate the boiler feedwater into steam and convey at least a part of the steam to the reforming furnace. To be understood, when it is described that a certain stream sequentially enters a first component and a second component or a similar description is used, it only indicates the order in which the stream enters the first and second components, and does not exclude the case where the stream also passes through a third component between the first and second components, nor does it exclude the case where the stream also passes through a third component before the first component or after the second component. For example, after the boiler feedwater passes through the post-heater 42, it can also undergo other treatments before entering the reforming furnace.

When the above syngas cooling apparatus 100 is used, since a liquid feed bypass 11 that bypasses the preheating heat exchanger is provided, the temperature, after the boiler feedwater preheated through the preheating heat exchanger and the boiler feedwater not preheated through the liquid feed bypass 11 meet together, can be easily adjusted. That is, the initial temperature of the boiler feedwater entering the deaerator can be lowered, which can thus avoid producing excessive water vapor under partial load, and maintain the pressure in the deaerator.

Overall, the heat absorbed by the boiler feedwater at the preheating heat exchanger becomes less, and the corresponding heat gets compensated in the coil inside the deaerator.

This disclosure also provides a thermal degasification method, employing the aforementioned thermal degasification system 10. By adjusting the flow rate of the target liquid q0 flowing downstream through the liquid feed bypass 11 in the thermal degasification system 10, the temperature of the target liquid q0 upon reaching the degasifier 3 is controlled, thereby matching the heat of the waste-heat stream f0 passing through the degasifier 3 via the hot-fluid pipeline 2 in the thermal degasification system 10, so that the target liquid q0 in the degasifier 3 reaches a predetermined temperature.

Overall, when the above thermal degasification system and method is used, taking its application for cooling syngas as an example, it can have the following advantages. A coil with a smaller area can be used in the deaerator. There is no need to provide a three-way valve or a mechanical linkage valve on the gas delivery pipeline, but only a water feed bypass on the water feed pipeline and a liquid two-way control valve installed on it. In this way, the capital expenditure can be significantly saved. Moreover, since the corresponding valves are omitted, the pressure drop of the entire shift/reforming gas cooling section becomes smaller, which is beneficial for energy saving. Moreover, the overall process, especially the arrangement of the control valves and the size of the piping engineering thereof, is easier to determine. This can significantly save engineering costs.

Compared with the prior art and the comparative example, this disclosure breaks the conventional design and uses a liquid valve on the water feed pipeline instead of a control valve on the gas delivery pipeline of the two-phase syngas. This can avoid excessive heat input to the deaerator through the boiler feedwater, thereby further avoiding excessive steam discharge and overpressure problems, especially under non-full load operating conditions.

Unless the contrary is clearly indicated, each aspect or embodiment defined herein can be combined with any one or more other aspects or one or more embodiments. In particular, any feature indicated as preferred or advantageous can be combined with any other feature indicated as preferred or advantageous.

The specific embodiments described in this specification are only preferred embodiments of this disclosure. The above embodiments are only used to illustrate the technical solution of this disclosure and not to limit this disclosure. Any technical solution that a person skilled in the art can obtain through logical analysis, reasoning, or limited experiments based on the concept of this disclosure should be within the scope of this disclosure.

## Claims

1. A thermal degasification system (10), comprising a liquid feed pipeline (1), a hot-fluid pipeline (2), a degasifier (3), and a pre-heater (41), wherein a target liquid (q0) flowing through the liquid feed pipeline (1) is collected in the degasifier (3), the hot-fluid pipeline (2) passes through the degasifier (3), whereby a waste-heat stream (f0) flowing through the hot-fluid pipeline (2) exchanges heat with the target liquid (q0) in the degasifier (3), so that the target liquid (q0) reaches a predetermined temperature through the heat of the waste-heat stream (f0), thereby removing a target gas (g1) dissolved in the target liquid (q0), and the pre-heater (41) is disposed on the liquid feed pipeline (1) upstream of the degasifier (3) for preheating the target liquid (q0), **characterized in that**, the thermal degasification system (10) further comprises a liquid feed bypass (11) and a regulator (5),
the liquid feed bypass (11) leads out from a first position (P1) of the liquid feed pipeline (1) and leads to a second position (P2) of the liquid feed pipeline (1), wherein on the liquid feed pipeline (1), the first position (P1) and the second position (P2) are upstream and downstream of the pre-heater (41), respectively, and the second position (P2) is upstream of the degasifier (3),
the regulator (5) is configured to be adjustable so that a flow rate of the target liquid (q0) flowing downstream through the liquid feed bypass (11) changes.

2. The thermal degasification system (10) according to claim 1, **characterized in that**, the regulator (5) is a control valve disposed on the liquid feed bypass (11).

3. The thermal degasification system (10) according to claim 1 or 2, **characterized in that**, the pre-heater (41) is a heat exchanger, wherein both the liquid feed pipeline (1) and the hot-fluid pipeline (2) pass through the pre-heater (41) to exchange heat with each other, whereby the target liquid (q0) in the liquid feed pipeline (1) is preheated by heat of the waste-heat stream (f0) in the hot-fluid pipeline (2);
the hot-fluid pipeline (2) conveys the waste-heat stream (f0) from the degasifier (3) to the pre-heater (41).

4. The thermal degasification system (10) according to any of the preceding claims, **characterized in that**, comprising a control system (8), which comprises a controller (80), a first detector (81), and a second detector (82), wherein the controller (80) regulates the regulator (5) according to detection signals of the first detector (81) and the second detector (82);
the first detector (81) is configured for detecting a pressure in the degasifier (3), and the second detector (82) is configured for detecting a temperature of the target liquid (q0) in the liquid feed pipeline (1) downstream of the second position (P2) and upstream of the degasifier (3).

5. The thermal degasification system (10) according to claim 4, **characterized in that**, the control system (8) is configured to adopt cascade control with the pressure in the degasifier (3) as a primary controlled parameter, the temperature of the target liquid (q0) as a secondary controlled parameter, and the flow rate through the liquid feed bypass (11) as a final control element.

6. The thermal degasification system (10) according to any of the preceding claims, **characterized in that**, further comprising a post-heater (42) and a liquid supply pipeline (7), wherein the liquid supply pipeline (7) is configured for feeding the target liquid (q0) that has passed through the degasifier (3) to downstream;
the post-heater (42) is a heat exchanger, wherein both the liquid supply pipeline (7) and the hot-fluid pipeline (2) pass through the post-heater (42) to exchange heat with each other, whereby the target liquid (q0) in the liquid supply pipeline (7) is heated by heat of the waste-heat stream (f0) in the hot-fluid pipeline (2);
the hot-fluid pipeline (2) conveys the waste-heat stream (f0) from the post-heater (42) to the degasifier (3).

7. A thermal degasification method, **characterized in that**, employing the thermal degasification system (10) according to any one of claims 1 to 6;
wherein, by adjusting a flow rate of a target liquid (q0) flowing downstream through a liquid feed bypass (11) in the thermal degasification system (10), a temperature of the target liquid (q0) upon reaching a degasifier (3) is controlled, thereby matching heat of the waste-heat stream (f0) passing through the degasifier (3) via the hot-fluid pipeline (2) in the thermal degasification system (10), so that the target liquid (q0) in the degasifier (3) reaches a predetermined temperature.

8. A syngas cooling apparatus (100), **characterized in that**, the syngas cooling apparatus (100) employs the thermal degasification system (10) according to any one of claims 1 to 6, wherein an deaerator of the syngas cooling apparatus (100) is a degasifier (3) of the thermal degasification system (10), a gas delivery pipeline for outputting syngas of the syngas cooling apparatus is a hot-fluid pipeline (2) of the thermal degasification system (10), a water feed pipeline for feeding boiler feedwater of the syngas cooling apparatus (100) is a liquid feed pipeline (1) of the thermal degasification system (10), and a preheating heat exchanger for preheating the boiler feedwater before the deaerator of the syngas cooling apparatus (100) is a pre-heater (41) of the thermal degasification system (10).

9. The syngas cooling apparatus (100) according to claim 8, **characterized in that**, further comprising a gas-liquid separator (30) and a cooler (20), wherein on the gas delivery pipeline, the gas-liquid separator (30) is disposed downstream of the preheating heat exchanger, and the cooler (20) is disposed between the deaerator and the preheating heat exchanger, and/or, between the preheating heat exchanger and the gas-liquid separator (30).

10. The syngas cooling apparatus (100) according to claim 8 or 9, **characterized in that**, a heating heat exchanger for heating the boiler feedwater after the deaerator and before a steam drum of the syngas cooling apparatus (100) is a post-heater (42) of the thermal degasification system (10).
